# EUROPÄISCHE PATENTANMELDUNG

(11) **EP 3 981 714 A1**
(43) Veröffentlichungstag der Anmeldung: **13.04.2022**
(21) Anmeldenummer: 21186655.3
(22) Anmeldetag: 20.07.2021
(51) Int. Cl.: B65G 1/127, E04H 6/00, E04H 6/14

(54) **MULTIFUNKTIONALE AUFBEWAHRUNGSEINRICHTUNG**

(30) Priorität: 29.07.2020 DE 102020004603
(71) Anmelder: Macht, Matthias, 04416 Markkleeberg (DE)
(72) Erfinder: Macht, Matthias, 04416 Markkleeberg (DE)
(74) Vertreter: Köhler, Tobias

(57) **Zusammenfassung**

Die Erfindung betrifft eine multifunktionale Aufbewahrungseinrichtung auf modularer boxenartiger Basis in vorgefertigten Aufbewahrungscontainern in horizontaler Verteilerebene, wobei in einer boxenartigen Basis (1) in zwei Etagen eine Reihe bildend Aufnahmen (2) für Aufbewahrungselemente (3) mittels jeweils mindestens zwei seitlich angeordneten Koppelpunkten (5) an einem angetriebenen Führungssystem (4) geführt sind, welches so ausgeführt ist, dass es an den Innenseiten zweier sich gegenüberliegender Wände (1a) der boxenartigen Basis (1) angeordnet ist und die mittels der Koppelpunkte (5) mit dem Führungssystem (4) verbundene Aufnahme (2) für Aufbewahrungselemente (3) durch die boxenartige Basis (1) über beide Etagen geführt ist, wobei an mindestens einem von zwei Hubbereichen (6), in dem die Aufnahmen (2) in die nächste Etage gehoben oder absenkt werden, die Aufbewahrungselemente (3) durch einen Zugang (7) dem Zugriff der Nutzer zum Ablegen oder zur Entnahme von Aufbewahrungsgut in oder aus den Aufbewahrungselementen (3) zur Verfügung gestellt sind.

## Beschreibung

Die Erfindung betrifft eine multifunktionale Aufbewahrungseinrichtung zur zeitweiligen Lagerung von Gegenständen, welche von Personen mitgeführt, aber bei beispielsweise Einkäufen oder Spaziergängen zeitweilig sicher abgelegt und verwahrt werden sollen.

Durch die Veränderung der insbesondere urbanen Verkehrsentwicklung entsteht ein ständig wachsender Bedarf an Einrichtungen zur Lagerung und Sicherung von Gegenständen bis hin zu Fahrrädern und anderen Fahrzeugen. Dies gilt besonders an öffentlichen Orten wie Bahnhöfen oder Park and Ride-Einrichtungen, an denen ein Wechsel der Verkehrsmittel stattfindet.

Die bis heute übliche Form der Lager- und Abschließmöglichkeit an Fahrradständern, an denen Fahrräder mit vom Benutzer mitgeführten Ketten- oder Bügelschlössern gesichert werden können, bietet keinen Schutz für die Fahrräder gegen Diebstahl und Beschädigung.

Bekannte Fahrradgaragen, die Boxen nach Art von Schließfächern für einzelne Fahrräder aufweisen, haben sich bisher nicht durchgesetzt.

Aus der DE 92 07 641 U1 ist eine Vorrichtung bekannt, bei der offene Tragelemente nach Art eines Fahrradständers vorgesehen sind, in die die Fahrräder einzustellen sind, wobei sie hier mit Sicherungsmitteln des Benutzers an die Tragelemente anzuschließen sind. Die Tragelemente werden dann in die obere Position gefahren, wobei die Fahrräder jeglichen Witterungseinfluss ausgesetzt sind. Erfolgte das gesonderte Anschließen nicht, so sind die Fahrräder bei missbräuchlichem Vorgehen leicht von den Tragelementen herunterzustoßen. Gegebenenfalls könnten sie sich bei starkem Wind sogar selber von den Tragelementen lösen.

Die EP 2 460 715 A1 beschreibt eine Fahrradparkvorrichtung. Diese Fahrradparkvorrichtung umfasst ein rotierendes Antriebselement, das Antriebskraft bereitstellt; eine rotierende Speichereinheit, die aus mehreren Ebenen besteht, die durch die Antriebskraft des rotierenden Antriebselements gedreht und so aufgeteilt werden, dass Fahrräder in einer radialen Konfiguration gelagert werden; eine Hebeeinheit, die an einer Umfangsseite der rotierenden Speichereinheit vorgesehen ist, um beladene Fahrräder anzuheben und abzusenken; und eine an der Hebeeinheit vorgesehene Lade-/Entladeeinheit zum Greifen und Laden eines Fahrrads von außen auf die Hebeeinheit oder zum Entladen eines Fahrrads von der Hebeeinheit nach außen.

Aus der DE 198 31 886 A1 ist eine Abstellanlage für Fahrräder mit einer Vielzahl von Halterungen bekannt, die jeweils zur Aufnahme eines Fahrrades ausgebildet sind. Es wird eine regalartige Ausgestaltung der Abstellanlage vorgeschlagen, mit einem Abstellbereich, in dem mehrere Paletten übereinander angeordnet sind, und mit einem Transportbereich, in dem ein vertikal verfahrbarer Lift vorgesehen ist, wobei der Lift einen horizontal verfahrbaren Greifer aufweist und wobei die Paletten Kupplungselemente aufweisen, die mit Kupplungselementen des Greifers korrespondieren, derart, daß die Palette am Greifer festlegbar und von diesem lösbar ist, und wobei die Paletten aus ihrer im Abstellbereich vorgesehenen Ruhestellung in eine Transportstellung verfahrbar sind, in der sie im Lift angeordnet sind, und mit einer Steuerungseinrichtung zur Steuerung der Bewegung des Liftes zwischen einer Einlade- bzw. Ausladestellung einerseits und den Paletten andererseits.

Die DE 195 00 094 C2 schlägt einen Fahrradtresor vor, welcher dadurch gekennzeichnet ist, daß die Tragelemente als Boxen ausgeführt sind, die jeweils eine vordere Öffnung haben und daß an den Führungssäulen Wandungsteile fest angeordnet sind, die sich verschließend vor die Öffnung der Boxen in deren oberer Position legen. Es ist verständlich, daß hiermit zum einen die eingeschlossenen Fahrräder in ihrer oberen Position wesentlich besser gegen Diebstahl und Beschädigung geschützt sind, da ein Zugang zu den Boxen in dieser Position nur mit großem Aufwand möglich ist und ein Unbefugter sich diesen nicht unauffällig verschaffen kann. Zum anderen ist von einer im Grundriss erforderlichen Gesamtgrundfläche für die Vorrichtung der größere Teil stets frei begehbar und wird nur für den Zeitraum des Beschickens bzw. Entleerens einer der Boxen zeitweise von dieser eingenommen.

Nachteilig bei diesen Lösungen ist zum einen der große Bedarf an Grundfläche sowie an gesetzlich geregelter Verkehrsfläche, zum anderen ist ein Schutz gegen Aufbrechen der einzelnen Boxen, insbesondere in nächtlichen Stunden, auch nicht gegeben.

Aufgabe der Erfindung ist es, eine Lösung vorzuschlagen, welche eine sichere und witterungsgeschützte Aufbewahrung von verschiedensten Gegenständen, beispielsweise auch Fahrrädern, bei bestmöglicher Volumennutzung von Aufbewahrungsmöglichkeiten unter geringstmöglichem Bedarf an Grundfläche sowie an gesetzlich geregelter Verkehrsfläche ermöglicht.

Die erfindungsgemäße multifunktionale Aufbewahrungseinrichtung auf modularer boxenartiger Basis dient zur Aufbewahrung von einer Vielzahl von Gütern.

Die Installation kann auf Grund einer speziellen modularen Ausführung kurzzeitig, dauerhaft, temporär sein.

In einer besonderen Ausgestaltungsform der erfindungsgemäßen Lösung ist auch das Aufbewahren von Fahrrädern möglich.

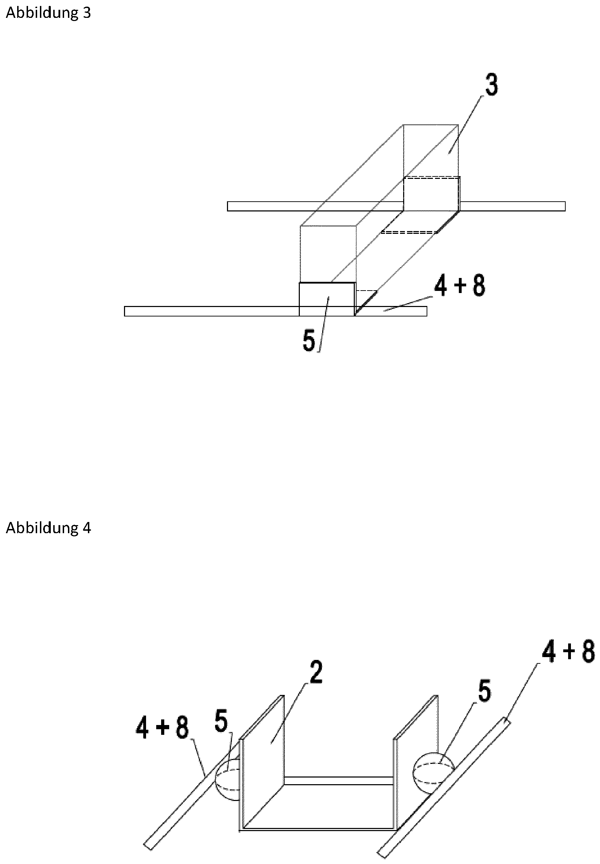

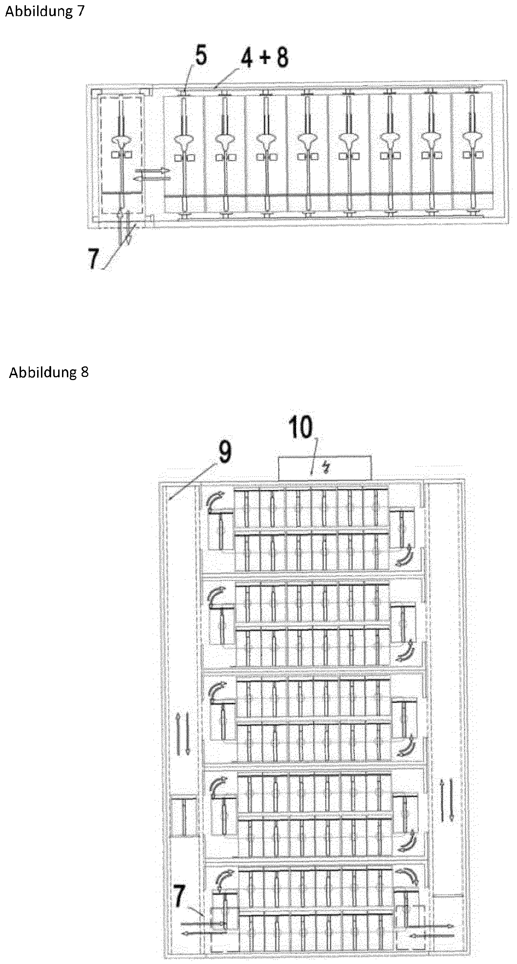

Nachfolgend soll die erfindungsgemäße Lösung soll anhand eines Beispiels in einer Ausführung zum Aufbewahren von Fahrrädern und der Abbildungen 1 bis 8 und den Patentansprüchen 1 bis 14 näher erläutert werden.

Dabei zeigt
Abbildung 1 die erfindungsgemäße multifunktionale Aufbewahrungseinrichtung in einer Seitenansicht im Schnitt,
Abbildung 2 die erfindungsgemäße multifunktionale Aufbewahrungseinrichtung in Draufsicht im Schnitt,
Abbildung 3 und Abbildung 4 ein Aufbewahrungselement 3 mit Führungssystem 4, Tarnsport- und Vorschubelementen 8 sowie den Koppelpunkten 5 in verschiedenen Ansichten,
Abbildung 5 eine Variante der erfindungsgemäßen Lösung in einer beispielhaften Ausführung zur Aufbewahrung von Fahrrädern mit zwei übereinander gestapelten boxenartige Basen,
Abbildung 6 die erfindungsgemäße multifunktionale Aufbewahrungseinrichtung mit einer vor dem Zugang 7 vorgesetzten Aufzugseinheit 9 in einer Seitenansicht im Schnitt,
Abbildung 7 die erfindungsgemäße multifunktionale Aufbewahrungseinrichtung mit einer vor dem Zugang 7 vorgesetzten Aufzugseinheit 9 in Draufsicht im Schnitt,
Abbindung 8 die erfindungsgemäße multifunktionale Aufbewahrungseinrichtung in beispielhafter Stapelung von fünf boxenartigen Basen 1 mit beidseitigen Zugängen 7 und ebenfalls beidseitig vorgesetzten Aufzugseinheiten 9.

Die erfindungsgemäße multifunktionale Aufbewahrungseinrichtung ist modular und vorzugsweise boxenartig ausgeführt.

Die Basis für einen solchen Aufbewahrungscontainer in vorzugsweise boxenartiger Ausführung kann in einer besonderen Ausgestaltung der erfindungsgemäßen Lösung aus ökonomischer wie auch ökologischer Sicht gebildet werden aus 20- oder 40-Fuß-Containern, sogenannten Seecontainern, welche in großer Zahl verfügbar sind. Jegliche andere Größe kann kundenbezogen angepasst und damit ausgeführt werden.

Die Multifunktionalität der erfindungsgemäßen Aufbewahrungseinrichtung basiert nicht nur auf der Möglichkeit, unterschiedlichste Gegenstände aufzubewahren.

Multifunktionalität wird dadurch erreicht, dass bei der hier beispielhaft beschriebenen Ausführung die Möglichkeit besteht, die erfindungsgemäße Aufbewahrungseinrichtung mit üblichen Transportmitteln schnell und unproblematisch umzusetzen und an verschiedensten Orten zum Einsatz zu bringen. So kann ein solcher Seecontainer beispielsweise in der Nähe von Bahnhöfen oder Park and Ride-Einrichtungen eingesetzt werden.

Entsteht an anderen Stellen Bedarf, so kann der Seecontainer als Basis für die erfindungsgemäße Aufbewahrungseinrichtung problemlos umgesetzt und anderem Ort ebenso problemlos wieder der Nutzung zugeführt werden.

Dies ist zum einen durch die Eigenstabilität des Seecontainers möglich, zum anderen durch die fest vorinstallierte Inneneinrichtung im Container.

So wird in vorgefertigten Aufbewahrungscontainern in einer horizontaler Verteilerebene ein angetriebenes und rotierendes Führungssystem 4 angeordnet. Dieses Führungssystem 4 wird an den Längsseiten des beispielsweise Seecontainers als boxenartige Basis 1 angeordnet.

Dabei ist das Führungssystem 4 so ausgeführt, dass es in dem Seecontainer eine über zwei Etagen verlaufende endpunktlose Kreisbahn bildet.
Das Führungssystem 4 kann dabei an jeder Längsseite des Seecontainers durch ein parallel und gleichlaufendes Transport- und Vorschubelement 8 gebildet werden. Dieses kann ausgeführt sein als angetriebene Kette oder als Transportelement mit Mitnehmern für die Aufnahmen 2 für die Aufbewahrungselemente 3.

Die Aufnahmen 2 für die Aufbewahrungselemente 3 sind so dimensioniert, dass sie die Breite des verwendeten Seecontainers optimal ausnutzen können. Dabei wird die reale Breite der Aufnahmen 2 durch die konstruktive Ausführung des Führungssystem 4 und somit der Transport- und Vorschubelemente 8 definiert.

Die Aufnahmen 2 sind mittels beidseitig angeordneten Koppelpunkten 5 so mit den Transport- und Vorschubelementen 8 des Führungssystems 4 verbunden, dass sie durch dieses gleichmäßig mitgeführt werden, jedoch so gelagert sind, dass sie im Bereich der Hubbereiche 6 auspendeln und ihre Lage beibehalten können.

Des Weiteren sind die Aufnahmen 2 beispielsweise so ausgeführt, dass an ihnen oder in ihnen verschiedene, dem Verwendungszweck anpassbare Aufbewahrungselemente 3 lösbar und austauschbar angeordnet werden können.
Dabei können diese Aufbewahrungselemente 3 als Aufbewahrungsbox ausgeführt werden oder aber auch als Fahrradaufnahme.
Es ist denkbar, eine solche Fahrradaufnahme so auszugestalten, dass ein oder zwei Fahrräder in festen Positionen gelagert werden können und zusätzlich eine sichere und saubere Aufbewahrung von Helmen, Schutzkleidung und Gepäck ermöglicht wird.

Abhängig von der Ausführung der Aufnahmen 2 und der Aufbewahrungselemente 3 ist die mögliche Anzahl derselben. Es können in einem Seecontainer so viele Aufnahmen 2 und Aufbewahrungselemente 3 angeordnet werden, wie sie sicher ohne einander zu behindern bewegt werden können.

In mindestens einem der zwei Hubbereiche 6, in dem die Aufnahmen 2 in die nächste Etage gehoben oder absenkt werden, ist ein Zugang 7 angeordnet, an welchem der Nutzer Zugang zu den Aufbewahrungselementen 3 hat, um Aufbewahrungsgut ablegen oder entnehmen zu können.
Ausschließlich an diesem Zugang 7 als vorgegebenen Ablage- oder Entnahmeöffnung ist ein Einstellen und Ausgeben der Güter, Fahrräder etc., vorzugsweise im Erdgeschoß bzw. bodengebunden, möglich.
Für die boxenartige Basis 1, ausgeführt als stapelbare Module über mehrere Ebenen/Geschosse zur maximalen Auslastung der Grundfläche wird eine ebenfalls modular gestaltete Aufzugseinheit 9 vorgesehen, die entweder außen angesetzt werden kann oder in die Container zu integrieren ist. Für eine schnellere Zugriffsgeschwindigkeit kann auch eine zweite Aufzugseinheit 9 angeordnet werden.

Durch diese Ausgestaltung ist es möglich, unbefugten Zugang zu verhindern. Es wird dadurch sichergestellt, dass Zutritt in das Aufbewahrungssystem nur für Servicepersonal im Wartungsfall möglich ist.

In einer besonderen und beispielhaften Ausgestaltung der erfindungsgemäßen Lösung ist das Führungssystem 4 so ausgeführt, dass es gebildet wird aus zwei gemeinsam angetriebenen Ketten 4a. Diese Ketten 4a sind dabei jeweils in einem Führungskäfig 4b geführt angeordnet. Diese Käfige 4b beschreiben an der sie aufnehmenden Seitenwand des beispielsweise Seecontainers eine Kreisbahn.

Antrieb und Steuerung der beiden Ketten 4a sind dabei so ausgeführt, dass die Ketten 4a synchron laufen.

Es ist dem Erfindungsgedanken auch zugehörig, dass eine andere Ausführungsform als eine Kette 4a den Vortrieb der Aufbewahrungselemente 3 realisiert.

Grundlage für eine solche den Vortrieb der Aufbewahrungselemente 3 realisierende Ausführungsform ist jedoch, dass die Aufnahmen 2 und damit die Aufbewahrungselemente 3 mit dieser den Vortrieb der Aufbewahrungselemente 3 realisierenden Ausführung koppelbar sind.

Eine weitere Ausgestaltung der erfindungsgemäßen Lösung kann darin gesehen werden, dass bei Stapelung mehrerer Container diese zueinander geöffnet werden und eine den Vortrieb der Aufbewahrungselemente 3 realisierende Einrichtung diese Container 1 mäanderartig durchfährt.

Dies ist insbesondere von Vorteil, wenn größere Aufbewahrungsgegenstände eingelagert werden sollen, wie dies beispielsweise Elektroroller oder elektrisch betriebene PKW sein können. Hierzu werden die Aufbewahrungselemente 3 entsprechend der erforderlichen Größe den Aufbewahrungsgegenständen angepasst.

Nachfolgend soll das Aufbewahrungssystem beispielhaft näher erläutert werden.

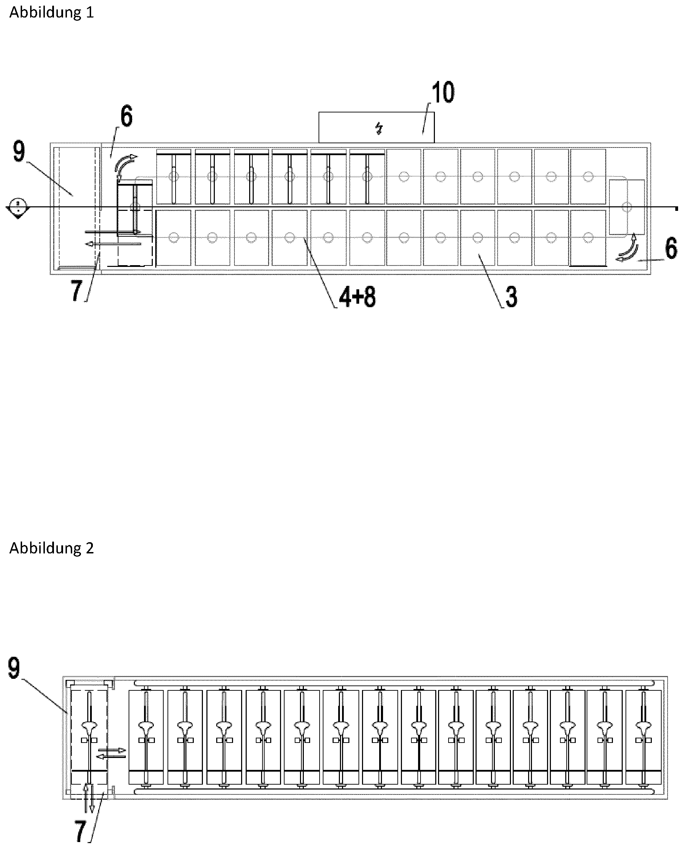

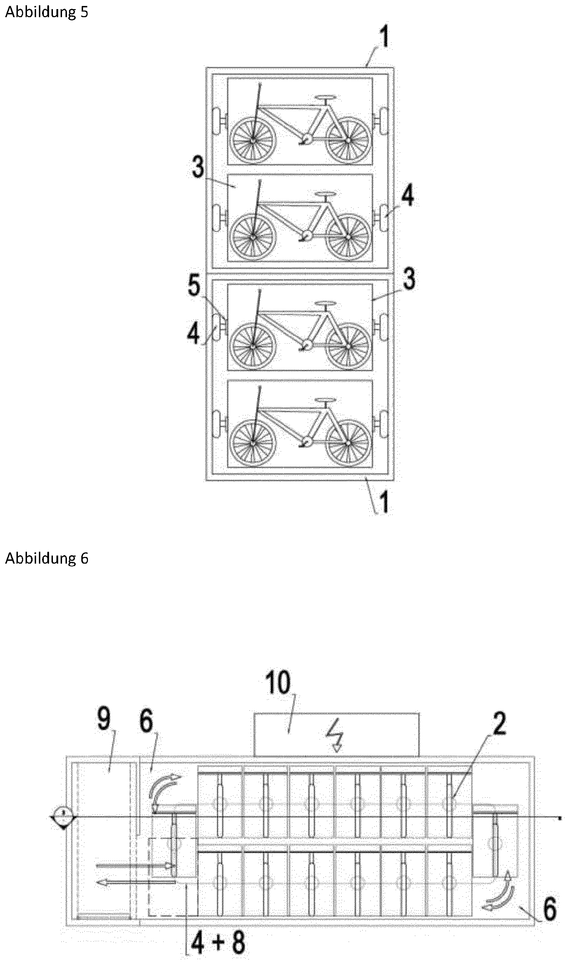

Das Aufbewahrungssystem, gebildet aus Aufnahmen 2 und Aufbewahrungselementen 3, kann entsprechend der jeweiligen Anforderung in der boxenartigen Größe angepasst werden. In den Abbildungen 2 und 5 ist es beispielhaft an ein Fahrrad in Breite und Höhe angepasst.
Entsprechend der Aufbewahrungsgegenstände kann sowohl die Größe der boxenartigen Basis 1 als auch die Ausführung der boxenartigen Basis 1 (geöffnet, gelocht, durchlüftet, geschlossen, etc.) angepasst werden.

Kleinteiliger können z.B. drei oder vier boxenartige Basen 1 je Containerhöhe angeordnet werden, großteiliger, zum Beispiel bei der Verwendung für PKW, kann eine Boxenhöhe je Containerhöhe angeordnet werden. Ebenso kann die Transportlänge abhängig von den Anforderungen gestaltet werden, indem man zwei oder mehrere Container hintereinander koppelt oder mit einer zwischen zwei Containern als boxenartige Basis 1 angeordneten Aufzugseinheit 9 koppelt.

Neben Fahrrädern können alle möglichen wärme-/kälteunempfindlichen Teile witterungsgeschützt und platzsparend aufbewahrt werden.
Sollte es notwendig sein, wärme-/kälteempfindlichen Teile witterungsgeschützt, modular aufzubewahren, so ist es durch zusätzliche modulare Dämmelemente möglich, die Umfassungsflächen der Container einzuhausen und ggf. durch die angekoppelte oder autarke Stromversorgung zu heizen oder zu kühlen.

Nachfolgend soll der Zugang 7 beispielhaft näher erläutert werden.

Der Zugang zu dem Aufbewahrungsraum wird durch mindestens einen verschließbaren Zugang 7 in der Außenhülle der boxenartigen Basis 1 oder mindestens eine Aufzugseinheit 9 sichergestellt.
Dieser Zugang 7 oder mehrere Zugänge 7 können sowohl manuell oder elektrisch, mit vorgeschalteten Überwachungssystemen, ausgerüstet sein.
Sie geben nur soviel Platz frei, dass die Aufbewahrungsbox vom Außenbereich in die Aufzugseinheit 9 gelangen kann, ohne dass Manipulationen und unbefugter Zugang ins Innere möglich sind. Ebenso können diese Zugangsöffnungen zwischen äußeren Zugang 7, Aufzugseinheit 9, VIP-Zugänge und dem Aufbewahrungsraum auch durch zusätzliche Trenneinheiten/Abweiser unterteilt werden.

Dies wird insbesondere für versuchte Manipulationen, Vandalismus, Unfallschutz, etc. notwendig, um einen störungsfreien Betrieb, auch bei automatisierter Nutzung zu gewährleisten.
Durch ein Zugangs-/Kamera-/Sicherheitssystem wird sichergestellt, dass keine Lebewesen in die boxenartigen Aufbewahrungsräume gelangen, wenn der Betrieb der Anlage im öffentlichen Bereich durchgeführt wird.

In besonderer Form der erfindungsgemäßen Lösung können exklusive Zugänge für Dauermieter angeboten werden.
Im Basis-/Erdgeschoßcontainer werden dabei zusätzlich zu den regulären Zugängen 7 in die Containerwand verschließbare/öffenbare Zugänge 7 geschaffen werden, damit Dauermieter einen schnelleren Zugriff auf deren Boxen erlangen. Vorzugsweise werden diese im chaotischen System um die jeweilige Öffnung herum zugeteilt, um die Zugriffszeiten weiter zu minimieren.

Die Übergabe der Aufbewahrungsboxen von außen in den inneren Aufbewahrungsraum der Container kann vorzugsweise über ein Einschubsystem mittels Schlitten und kleinen Hub-/Übergabeeinheiten erfolgen.

Schlitten von außen in die Aufzugseinheit 9:
Diese Schlittenebene kann für eine bequeme Bestückung der Boxen erfolgen, indem der Schlitten das Aufbewahrungselement 3 einen definierten Schubweg nach außen schiebt, um einer definierten Bequemlichkeit die Bestückung des Aufbewahrungselementes 3 zu ermöglichen. Durch entsprechende Haltesysteme wird verhindert, dass die Aufbewahrungselemente 3 unberechtigt und vollständig von den Schlitten nach außen gezogen werden können.

Schlitten vom Lift oder dem Zugangsbereich in den Aufbewahrungsbereich:
Mittels einer weiteren Verfahrrichtung in der gleichen (oder versetzten) Ebene zu diesem Schlitten wird das Aufbewahrungselement 3 in Richtung des Aufbewahrungsbereiches bewegt, damit das Aufbewahrungselement 3 durch die Aufnahmen 2 an das Führungssystem 4 sowie Transportsystem 8 angekoppelt werden kann.

Bei Stapelung weniger Container als boxenartige Basis 1 können Aufzugseinheiten 9 beidseitig an der boxenartigen Basis 1 angeordnet werden.
Bei höherer Stapelung kann vorzugsweise die oder mehrere Aufzugseinheiten 9 angesetzt oder integriert werden.
Dabei erfolgt vorzugsweise ein Zugang nur im Bereich der unteren Ebene, kann aber auch nach Anforderung/örtlicher Gegebenheit (z.B. Hanglage) in einer anderen Höhe angeordnet werden, so dass ein Transport nach oben (Regelfall), aber auch nach unten oder nach oben und unten möglich ist.

Die Energieversorgung der erfindungsgemäßen Lösung ist möglich durch einen Anschluss an das bestehende Stromnetz.
Es ist jedoch auch möglich, eine Energieversorgung autark durch eigene innovative Stromversorgung 10 auf Dach, Wand, Sonnensegel usw. zu realisieren.
Dadurch kann die erfindungsgemäße Aufbewahrungseinrichtung auch in nicht erschlossenen Gebieten autark aufgestellt und genutzt werden.
Somit weist die erfindungsgemäße multifunktionale Aufbewahrungseinrichtung den Vorteil auf, dass sie auch autark eingesetzt werden kann.

Möglich ist auch eine Ausgestaltung mit Möglichkeiten zum Aufbewahren und Laden von E-Bikes, Elektroautos oder -rollern zu integrieren oder anzubinden.

Ebenso ist es entsprechend der baulichen Anlage möglich, einzelne Seecontainer als Module zu stapeln oder horizontal zueinander anzuordnen und miteinander zu verbinden. Durch die Variabilität der modularen Bauweise ist es möglich, die Seecontainer als Module zueinander nach oben und unten oder von oben nach unten anzuordnen und somit die Ausgabestelle je gewünschter Etage/Ebene anzuordnen (z.B. bei Rampen, Hanglage, etc.).
Dabei werden die Zugänge 7 der gestapelten Aufbewahrungseinrichtung übereinander angeordnet und sind mittels einer bedarfsgerecht konzipierten Aufzugseinheit 9, welche alle übereinander gestapelten Zugänge 7 erreicht, anzufahren.

Vorzugsweise erfolgt in der horizontalen Aufbewahrungsebene der Transport der Aufbewahrungselemente 3 mittels des Führungssystems 4 in Abhängigkeit der notwendigen Ausgabedauer, z.B. im Karussellsystem oder im chaotischen System.

Ebenfalls ist es möglich, die erfindungsgemäße Aufbewahrungseinrichtung so auszugestalten, dass sie mittels einer App steuerbar oder über ein Bedienfeld am Container zu steuern ist.

Die Gestaltung der Wandflächen der erfindungsgemäßen Aufbewahrungseinrichtung ist in allen Varianten ausführbar. So können diese Wandflächen begrünt werden oder aber sind in allen durch den Betreiber gewünschten Varianten zu gestalten und als Werbefläche oder Multimediafläche nutzbar.

Ebenfalls ist es möglich, mehrere kombinierte und gekoppelte Module mit zusätzlichen Funktionen auszugestalten und auf und zwischen den Modulen beispielsweise Meeting Points einzurichten und die Dachflächen als Dachterrasse als Cafe oder Bike-Werkstatt, oder im Erdgeschoß als Cafe, Sitztreppen oder die Wände als Kletterwand zu nutzen. Auch ist eine Ausstattung mit Notfallsystemen wie Kameras, Notfallknopf, Digital-Monitoren für Verfügbarkeiten, Temperatur, etc. sowie die Einbindung von Zusatznutzungen mit diversen Ausbaustufen (VIP-Zugriff etc.) möglich.

## Patentansprüche

1. Multifunktionale Aufbewahrungseinrichtung auf modularer boxenartiger Basis in vorgefertigten Aufbewahrungscontainern in horizontaler Verteilerebene, wobei in einer boxenartigen Basis (1) in zwei Etagen eine Reihe bildend Aufnahmen (2) für Aufbewahrungselemente (3) mittels jeweils mindestens zwei seitlich angeordneten Koppelpunkten (5) an einem angetriebenen Führungssystem (4) geführt sind, welches so ausgeführt ist, dass es an den Innenseiten zweier sich gegenüberliegender Wände (1a) der boxenartigen Basis (1) angeordnet ist und die mittels der Koppelpunkte (5) mit dem Führungssystem (4) verbundene Aufnahme (2) für Aufbewahrungselemente (3) durch die boxenartige Basis (1) über beide Etagen geführt ist, wobei an mindestens einem von zwei Hubbereichen (6), in dem die Aufnahmen (2) in die nächste Etage gehoben oder absenkt werden, die Aufbewahrungselemente (3) durch einen Zugang (7) dem Zugriff der Nutzer zum Ablegen oder zur Entnahme von Aufbewahrungsgut in oder aus den Aufbewahrungselementen (3) zur Verfügung gestellt sind.

2. Multifunktionale Aufbewahrungseinrichtung auf modularer boxenartiger Basis in vorgefertigten Aufbewahrungscontainern in horizontaler Verteilerebene, wobei in einer boxenartigen Basis (1) in zwei Etagen eine Reihe bildend Aufnahmen (2) für Aufbewahrungselemente (3) mittels jeweils mindestens zwei seitlich angeordneten Koppelpunkten (5) an einem angetriebenen rotierenden Führungssystem (4) geführt sind, welches so ausgeführt ist, dass es an den Innenseiten zweier sich gegenüberliegenden Wände (1a) der boxenartigen Basis (1) angeordnet ist und die mittels der Koppelpunkte (5) mit dem Führungssystem (4) verbundene Aufnahme (2) für Aufbewahrungselemente (3) durch die boxenartige Basis (1) in einer endpunktlosen Kreisbahn über beide Etagen geführt ist, wobei an mindestens einem von zwei Hubbereichen (6), in dem die Aufnahmen (2) in die nächste Etage gehoben oder absenkt werden, die Aufbewahrungselemente (3) durch einen Zugang (7) dem Zugriff der Nutzer zum Ablegen oder zur Entnahme von Aufbewahrungsgut in oder aus den Aufbewahrungselementen (3) zur Verfügung gestellt sind.

3. Multifunktionale Aufbewahrungseinrichtung nach Anspruch 1 oder 2, welche stapelbar ist, wobei die Zugänge (7) der gestapelten Aufbewahrungseinrichtung übereinander angeordnet sind und mittels eines bedarfsgerecht konzipierten Lifts (9), welcher alle übereinander gestapelten Zugänge (7) erreicht, anzufahren sind.

4. Multifunktionale Aufbewahrungseinrichtung nach Anspruch 1 oder 2, welche mindestens einen verschließbaren Zugang (7) in der Außenhülle der boxenartigen Basis (1) aufweist.

5. Multifunktionale Aufbewahrungseinrichtung nach Anspruch 1 oder 2, welche mindestens eine Aufzugseinheit (9) aufweist.

6. Multifunktionale Aufbewahrungseinrichtung nach Anspruch 1 oder 2, deren Zugang (7) oder Zugänge (7), sowohl manuell oder elektrisch, mit vorgeschalteten Überwachungssystemen ausgerüstet ist.

7. Multifunktionale Aufbewahrungseinrichtung nach Anspruch 1 oder 2, deren Zugang (7) oder Zugänge (7) so gestaltet sind, dass sie nur soviel Platz freigeben, dass das Aufbewahrungselement (3) vom Außenbereich in die Aufzugseinheit (9) gelangen kann, ohne dass Manipulationen und unbefugter Zugang ins Innere möglich sind.

8. Multifunktionale Aufbewahrungseinrichtung nach Anspruch 1 oder 2, aufweisend mindestens einen Schlitten von außen in die Aufzugseinheit (9) zur Bestückung der Aufbewahrungselemente (3), derart ausgestaltet, dass der Schlitten das Aufbewahrungselement (3) einen definierten Schubweg nach außen schiebt und damit die Bestückung des Aufbewahrungselementes (3) realisiert und weiterhin aufweisend ein Haltesystem, mittels welchem ein unberechtigtes und vollständiges Herausziehen des Schlittens zu unterbinden ist.

9. Multifunktionale Aufbewahrungseinrichtung nach Anspruch 1 oder 2, aufweisend mindestens einen Schlitten von der Aufzugseinheit (9) oder dem Zugangsbereich in den Aufbewahrungsbereich.

10. Multifunktionale Aufbewahrungseinrichtung nach Anspruch 1 oder 2, mittels welchem das Aufbewahrungselement (3) in Richtung des Aufbewahrungsbereiches zu bewegen ist, damit die Aufbewahrungselemente (3) durch die Aufnahmen (2) an das Führungssystem (4) sowie Transportsystem (8) angekoppelt werden können.

11. Multifunktionale Aufbewahrungseinrichtung nach Anspruch 1 oder 2, bei welcher bei Stapelung weniger Container als boxenartige Basis (1) Aufzugseinheiten (9) beidseitig an der boxenartigen Basis (1) angeordnet sind.

12. Multifunktionale Aufbewahrungseinrichtung nach Anspruch 1 oder 2, bei welcher bei höherer Stapelung eine oder mehrere Aufzugseinheiten (9) an die boxenartigen Basen (1) angesetzt oder in diese integriert sind.

13. Multifunktionale Aufbewahrungseinrichtung nach Anspruch 12, bei welcher ein Zugang nur im Bereich der unteren Ebene realisiert ist bzw. nach Anforderung/örtlicher Gegebenheit, beispielsweise einer Hanglage, in einer anderen Höhe anzuordnen ist.

14. Multifunktionale Aufbewahrungseinrichtung nach Anspruch 1 oder 2, welche mit einer autarken Stromversorgung (10) ausgestattet ist.
